# EUROPEAN PATENT APPLICATION

(11) **EP 1 701 294 A1**
(43) Date of publication of application: **13.09.2006**
(21) Application number: 05793137.0
(22) Date of filing: 13.10.2005
(51) Int. Cl.: G06K 17/00, H04B 1/59, H04B 5/02

(54) **RFID PAPER MANUFACTURING DEVICE AND INSPECTION METHOD IN THE RFID PAPER MANUFACTURING DEVICE**

(30) Priority: 28.10.2004 JP 4313308
(71) Applicant: Kabushiki Kaisha Sato, Tokyo 150-0013 (JP)
(72) Inventor: ABE, Toshiaki, c/o Kabushiki Kaisha Sato, Shibuya-ku 1500013 (JP); SUZUKI, Hiroyuki, c/o Kabushiki Kaisha Sato, Shibuya-ku 1500013 (JP)
(74) Representative: Denness, James Edward
(86) International application number: PCT/JP2005/018890
(87) International publication number: WO 2006/046413

(57) **Abstract**

The present invention provides an RFID paper manufacturing apparatus and an inspection method of an RFID paper manufacturing apparatus with which the location of a fault in the apparatus causing a defect in an RFID tag can be specified easily. An RFID label manufacturing apparatus comprises: a reader/writer for performing at least one of reading the information stored in the RFID tag and writing information to the RFID tag; a plurality of antennas disposed in a plurality of predetermined positions on a path along which the RFID tag is conveyed, for transmitting and receiving information to/from the RFID tag; a switching circuit for switching the antenna that is connected to the reader/writer; and a CPU for detecting an error in at least one of the information writing and the information reading performed by the reader/writer via the antenna that is connected to the reader/writer by the switching operation of the switching circuit.

## Description

### Field of the Invention

The present invention relates to an RFID paper manufacturing apparatus for manufacturing paper encasing an RFID tag on which information is stored, and an inspection method of the RFID paper manufacturing apparatus.

### Description of the Related Art

In recent years, RFID (Radio Frequency Identification) tags having in-built IC chips, antenna communication means, and so on, which enable electrical, non-contact reading and writing of information, have been developed to facilitate inventory management, sales management, and so on. An RFID tag is capable of storing a large volume of information on the in-built IC chip, and of transmitting and receiving information wirelessly (through electromagnetic induction) and in non-contact fashion. Moreover, since the RFID tag is difficult to counterfeit, it is advantaged in terms of security. This type of RFID tag is encased in a label, for example, and used as an RFID label.

In an RFID paper manufacturing apparatus, an inlet having RFID tags disposed at predetermined intervals is conveyed, a backing sheet is adhered temporarily to the lower surface of the inlet, and printing paper is affixed to the upper surface thereof. The inlet and printing paper are then cut into RFID tag units, and the RFID label is constituted by the cut inlet and printing paper (see Japanese Unexamined Patent Application Publication 2002-72886, Japanese Unexamined Patent Application Publication 2002-134635, Japanese Unexamined Patent Application Publication 2002-279389, and Japanese Unexamined Patent Application Publication 2003-6596, for example).

In the conventional RFID paper manufacturing apparatus described above, tension, pressure, and so on are applied to the RFID tag during conveyance of the inlet, temporary adhesion of the backing sheet, affixation of the printing paper, and so on. Hence, when a fault occurs in the apparatus, excessive force may be applied to the RFID tag, causing damage and other defects. However, when a fault which may lead to a defect in the RFID tag occurs in a conventional RFID paper manufacturing apparatus, it is not easy to specify the location of the fault.

### SUMMARY OF THE INVENTION

The present invention has been designed in order to solve the problems of the prior art, such as those described above, and it is an object thereof to provide an RFID paper manufacturing apparatus and an inspection method of an RFID paper manufacturing apparatus with which the location of a fault in the apparatus causing a defect in an RFID tag can be specified easily.
An RFID paper manufacturing apparatus according to the present invention manufactures paper encasing an RFID tag on which information is stored, and comprises: information reading/writing means for performing at least one of reading the information stored in the RFID tag and writing information to the RFID tag; a plurality of antennas disposed in a plurality of predetermined positions on a path along which the RFID tag is conveyed, for transmitting and receiving information to/from the RFID tag; antenna switching means for switching an antenna that is connected to the information reading/writing means; and error detecting means for detecting an error in at least one of the information writing and the information reading provided by the information reading/writing means via an antenna that is connected to the information reading/writing means by a switching operation of the antenna switching means.
By means of this constitution, information is transmitted to and received from the RFID tag via the antennas disposed in a plurality of positions on the conveyance path, whereby information reading and writing are performed and an error occurring during the reading and writing of this information is detected. Thus, the location of a fault on the conveyance path of the apparatus causing the information reading or writing error can be specified easily. Moreover, the information reading/writing means is shared among the plurality of antennas by switching the connection between the information reading/writing means and the antennas, and as a result, design restrictions can be eased and reductions in the size and cost of the apparatus can be achieved.
The RFID paper manufacturing apparatus according to the present invention further comprises error notification control means for controlling the notification of the error detected by the error detecting means in such a manner that an antenna relating to the error can be specified.
By means of this constitution, an operator can recognize the antenna which is performing reading or writing when the error occurs, and take measures by specifying the location of the fault causing the error on the conveyance path of the apparatus. Further, in the RFID paper manufacturing apparatus according to the present invention, the antenna switching means connects an antenna to the information reading/writing means at a timing at which transmission and reception between the antenna and a single RFID tag are possible.
By means of this constitution, operations to read the information stored in the RFID tag via an antenna and write information to the RFID tag via an antenna can be performed reliably.
Further, in the RFID paper manufacturing apparatus according to the present invention, the plurality of antennas comprise: a first antenna for receiving unique identification information stored in the RFID tag; and a second antenna disposed further downstream than the first antenna on the path along which the RFID tag is conveyed, for transmitting variable information to the RFID tag specified by the unique identification information received by the first antenna.
By means of this constitution, errors occurring during operations to read unique identification information and write variable information can be detected.
In the RFID paper manufacturing apparatus according to the present invention, the plurality of antennas further comprise a third antenna for receiving at least one of the unique identification information and the variable information stored in the RFID tag specified by the unique identification information received by the first antenna.
By means of this constitution, a reading error can be detected by comparing unique identification information read via the first antenna and unique identification information read via the third antenna, and a reading error can be detected by comparing variable information written via the second antenna and variable information read via the third antenna.
The RFID paper manufacturing apparatus according to the present invention further comprises a shield member which is disposed in the vicinity of the first antenna, for blocking electromagnetic waves.
By means of this constitution, the first antenna can be prevented from receiving unique identification information from a plurality of RFID tags simultaneously, and a defective RFID tag can be specified reliably.
Further, an RFID paper manufacturing apparatus according to the present invention manufactures paper encasing an RFID tag on which information is stored, and comprises: a plurality of information reading/writing means for performing at least one of reading the information stored in the RFID tag and writing information to the RFID tag; a plurality of antennas corresponding respectively to the plurality of information reading/writing means and disposed in a plurality of predetermined positions on a path along which the RFID tag is conveyed, for transmitting and receiving information to/from the RFID tag; antenna switching means provided so as to correspond respectively to the plurality of information reading/writing means, for switching antennas that are connected to the information reading/writing means; and error detecting means for detecting an error in at least one of the information writing and the information reading provided by corresponding information reading/writing means via an antenna that is connected to the information reading/writing means by a switching operation of the antenna switching means. By means of this constitution, when the number of antennas is large, the number of information reading/writing means is increased and each information reading/writing means is shared by a different plurality of antennas. In so doing, the time each individual antenna is connected to the information reading/writing means can be increased to a certain extent. Further, in an inspection method of an RFID paper manufacturing apparatus according to the present invention an inspection is performed in an RFID paper manufacturing apparatus for manufacturing paper encasing an RFID tag on which information is stored. The method comprises the steps of: switching a connection between a plurality of antennas, which are disposed in a plurality of predetermined positions on a path along which the RFID tag is conveyed for transmitting and receiving information to/from the RFID tag, and information reading/writing means; having the information reading/writing means, to which an antenna is connected in the antenna switching step, perform at least one of reading the information stored in the RFID tag and writing information to the RFID tag via the connected antenna; and detecting an error in at least one of the information writing and the information reading performed in the information reading/writing step.
The inspection method of an RFID paper manufacturing apparatus according to the present invention further comprises the step of controlling the notification of the error detected in the error detecting step in such a manner that an antenna relating to the error can be specified. Further, in the inspection method of an RFID paper manufacturing apparatus according to the present invention, an antenna is connected to the information reading/writing means in the antenna switching step at a timing at which transmission and reception between the antenna and a single RFID tag are possible.
According to the RFID paper manufacturing apparatus and the inspection method of an RFID paper manufacturing apparatus of the present invention, information is transmitted and received between antennas disposed in a plurality of positions on a conveyance path and an RFID tag, whereby information reading and writing are performed and an error occurring during the reading and writing of this information is detected. Thus, the location of a fault on the conveyance path of the apparatus causing the information reading or writing error can be specified easily.

### BRIEF DESCRIPTION OF THE DRAWINGS

Fig. 1 is a view showing the constitution of an RFID label manufacturing apparatus;
Fig. 2 is a sectional view of a backing sheet;
Fig. 3 is a top view and a sectional view of an inlet;
Fig. 4 is a sectional view of a backing sheet and printing paper;
Fig. 5 is a sectional view of label paper;
Fig. 6 is a schematic diagram of storage memory in an IC chip installed in an RFID tag;
Fig. 7 is a view showing the constitution of a control system in the RFID label manufacturing apparatus;
Fig. 8 is a schematic diagram of a management table;
Fig. 9 is a flowchart showing a first operational example of the RFID label manufacturing apparatus;
Fig. 10 is a flowchart showing a second operational example of the RFID label manufacturing apparatus;
Fig. 11 is a flowchart showing a third operational example of the RFID label manufacturing apparatus;
Fig. 12 is a flowchart showing a fourth operational example of the RFID label manufacturing apparatus;
Fig. 13 is a flowchart showing a fifth operational example of the RFID label manufacturing apparatus;
Fig. 14 is a view showing a first different constitution of an antenna, a switching circuit, a reader/writer, and a reader/writer control unit of the RFID label manufacturing apparatus; and
Fig. 15 is a view showing a second different constitution of the antenna, switching circuit, reader/writer, and reader/writer control unit of the RFID label manufacturing apparatus.

### DESCRIPTION OF THE PREFERRED EMBODIMENTS

An RFID paper manufacturing apparatus according to an embodiment of the present invention will now be described using the drawings. In the following, an RFID label manufacturing apparatus which encases an RFID tag in paper by temporarily adhering an RFID tag to a backing sheet and affixing printing paper thereto will be described as the RFID paper manufacturing apparatus.

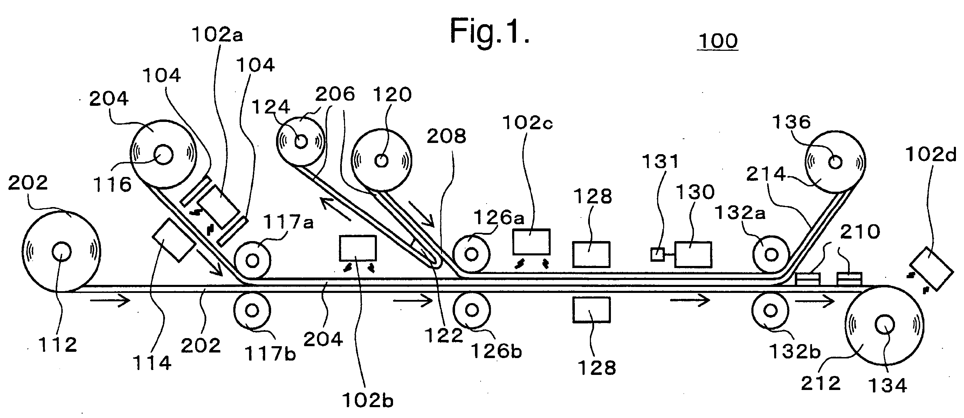

Fig. 1 is a view showing the constitution of an RFID label manufacturing apparatus according to an embodiment of the present invention.

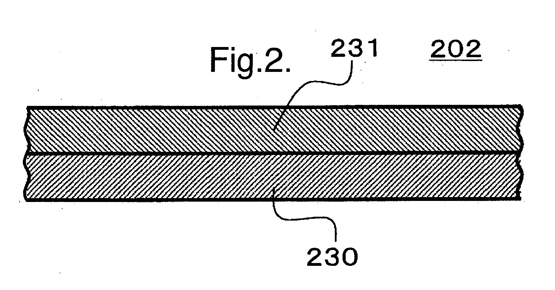

In an RFID label manufacturing apparatus 100 in Fig. 1, a backing sheet 202 is wound around a supply shaft 112. The backing sheet 202 wound around the supply shaft 112 is supplied to rollers 117a and 117b on a conveyance path. Fig. 2 is a sectional view of the backing sheet 202. As shown in the figure, the backing sheet 202 is constituted by a base layer 230 and a silicon layer 231 disposed on the upper surface of the base layer 230.

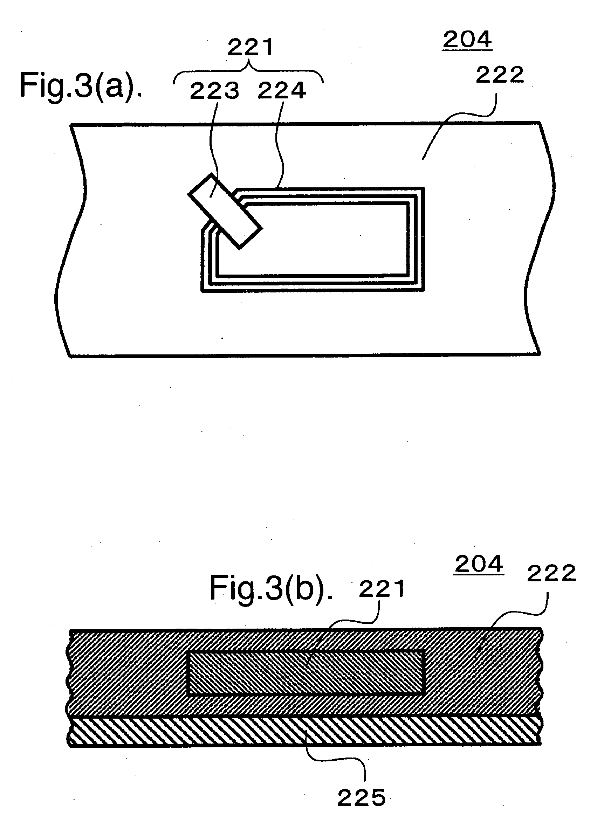

An inlet 204 is wound around a supply shaft 116. Fig. 3 is a top view and a sectional view of the inlet 204. As shown in the figure, the inlet 204 is constituted by an RFID tag 221 comprising an IC chip 223 and an antenna layer 224, and a film layer 222 in which the RFID tags 221 are encased at predetermined intervals. The inlet 204 wound around the supply shaft 116 is supplied to a coating unit 114 on the conveyance path. The coating unit 114 coats one surface of the inlet 204 with a hot melt adhesive to form a tacky layer 225. Once the tacky layer 225 has been formed, the inlet 204 is supplied to the rollers 117a and 117b on the conveyance path.

The rollers 117a and 117b are supported rotatably by another member (not shown), and press the inlet 204 toward the backing sheet 202 side while rotating. By means of this pressure, the tacky layer 225 comes into contact with the backing sheet 202, and thus the inlet 204 is adhered temporarily to the backing sheet 202. The backing sheet 202 and the inlet 204 adhered temporarily to the backing sheet 202 are then supplied to rollers 126a and 126b on the conveyance path.

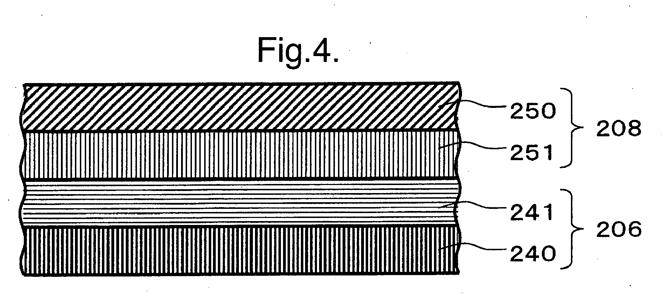

A backing sheet 206 and printing paper 208 adhered temporarily to the backing sheet 206 are wound around a supply shaft 120. Fig. 4 is a sectional view of the backing sheet 206 and printing paper 208. As shown in the figure, the backing sheet 206 is constituted by a base layer 240 and a silicon layer 241 disposed on the upper surface of the base layer 240. Meanwhile, the printing paper 208 is constituted by a printing layer 250 and a tacky layer 251 which is formed on the lower surface of the printing layer 250 and contacts the backing sheet 206 such that the printing paper 208 is adhered temporarily to the backing sheet 206. The backing sheet 206 and printing paper 208 wound around the supply shaft 120 are supplied to a peeling plate 122. At the peeling plate 122, the backing sheet 206 alone switches direction and is pulled toward a wind-up shaft 124 and wound around the wind-up shaft 124. As a result, the printing paper 208 is peeled away from the backing sheet 206. Having been peeled away from the backing sheet 206, the printing paper 208 is supplied to the rollers 126a and 126b on the conveyance path.

The rollers 126a and 126b rotate are supported rotatably by another member (not shown), and press the printing paper 208 toward the backing sheet 202 and inlet 204 side while rotating. By means of this pressure, the tacky layer 251 comes into contact with the inlet 204, and thus the printing paper 208 is adhered to the inlet 204. The laminated backing sheet 202, inlet 204, and printing paper 208 are then supplied to a printing unit 128 on the conveyance path.

The printing unit 128 prints an identification mark on the lower surface of the backing sheet 202, and prints a temporary identification mark, and if necessary constants such as a company name or frame, on the upper surface of the printing paper 208. After the identification mark, temporary identification mark, and constants have been printed, the laminated backing sheet 202, inlet 204, and printing paper 208 are supplied to a die cutting unit 130 on the conveyance path.

The die cutting unit 130 comprises a sensor 131 which detects the temporary identification mark printed on the printing paper 208. Then, on the basis of the detection timing of the temporary identification mark, the die cutting unit 130 cuts the inlet 204 and printing paper 208 into a predetermined shape. The backing sheet 202 and the cut inlet 204 and printing paper 208 are then supplied to rollers 132a and 132b on the conveyance path.

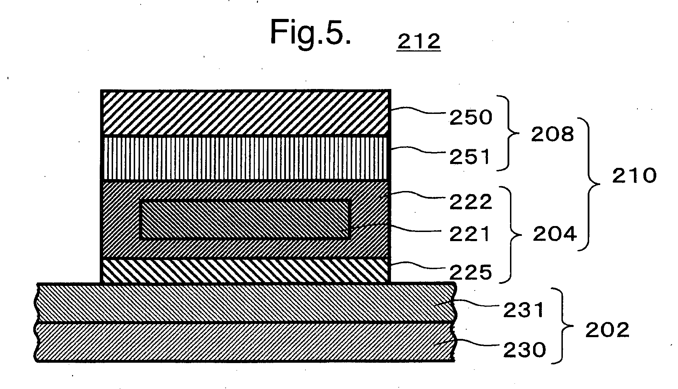

The rollers 132a and 132b are supported rotatably by another member (not shown). The backing sheet 202 and the cut inlet 204 and printing paper 208 supplied to the rollers 132a and 132b are separated into the backing sheet 202 and the inlet 204 and printing paper 208 cut into the predetermined shape, which are pulled toward a wind-up shaft 134, and unnecessary parts (waste) 214 existing on the periphery of the inlet 204 and printing paper 208 cut into the predetermined shape, which are pulled toward a wind-up shaft 136. The backing sheet 202 and the inlet 204 and printing paper 208 cut into the predetermined shape (RFID labels 210) are wound around the wind-up shaft 134 as label paper 212. Fig. 5 shows a sectional view of the label paper 212. As shown in the figure, the label paper 212 has a laminated structure comprising the backing sheet 202 and the RFID label 210, which is constituted by the inlet 204 and printing paper 208 cut into the predetermined shape and adhered temporarily to the backing sheet 202. Meanwhile, the waste 214 is wound around the wind-up shaft 136. By means of the operation described above, the label paper 212, in which the RFID labels 210 are adhered temporarily to the backing sheet 202, is manufactured.

A first antenna 102a, a second antenna 102b, a third antenna 102c, and a fourth antenna 102d (hereafter, the first antenna 102a, second antenna 102b, third antenna 102c, and fourth antenna 102d will be referred to collectively as an "antenna 102" where appropriate) are disposed on the conveyance path for performing reception for reading the information stored in the RFID tag 221 and transmission for writing information to the RFID tag 221. The first antenna 102a is disposed between the supply shaft 116 and the rollers 117a, 117b, and the second antenna 102b is disposed between the rollers 117a, 117b and the rollers 126a, 126b. The third antenna 102a is disposed between the rollers 126a, 126b and the printing unit 128, and the fourth antenna 102d is disposed above the wind-up shaft 134.

A shield member 104 is disposed in the vicinity of the first antenna 102a for blocking external electromagnetic waves and restricting the communication region of the first antenna 102a such that communication is possible only with a single RFID tag 221. However, the shield members 104 are not disposed in the vicinity of the second antenna 102b through fourth antenna 102d. The second antenna 102b through fourth antenna 102d have a larger communication region than the first antenna 102a. This enables modification of the size and position of the second antenna 102b through fourth antenna 102d in accordance with the object of the RFID tag 221 or the RFID label 210 encasing the RFID tag 221, and thus allows the second antenna 102b through fourth antenna 102d to respond flexibly to the size of the RFID tag 221 or the RFID label 210 encasing the RFID tag 221.

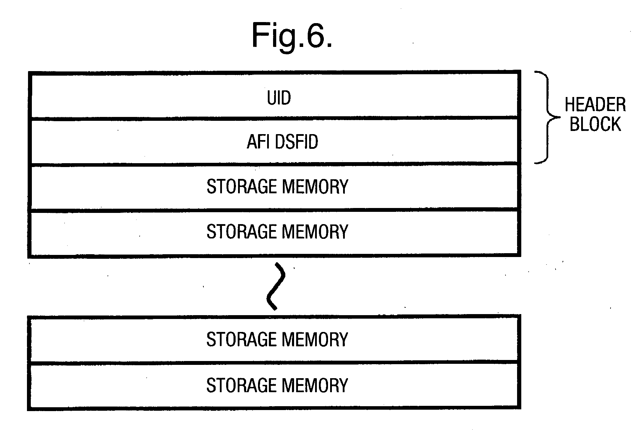

Fig. 6 is a schematic diagram of storage memory in the IC chip 223 installed in the RFID tag 221 which performs transmission and reception with the antenna 102. The storage memory at the top of Fig. 6 is a header block constituted by a unique identification information (Unique Identifier: UID) block comprising fixed information "E0", an IC manufacturer code of the RFID tag 221, an IC manufacturer serial number, and so on, and an expansion block comprising application family identification information (Application Family Identifier: AFI), data storage format identification information (Data Storage Format Identifier: DSFID), and so on.

The information in the header block is written at the manufacturing source of the RFID tag 221, and the IC manufacturer code and IC manufacturer serial number of the unique identification information are numbered such that no identical numbers exist at the manufacturing source of the RFID tag 221. Note that the unique identification information is numbered irregularly rather than sequentially according to the manufacturing process of the RFID tag 221 and the manufacturing process of the RFID label 210 encasing the RFID tag 221.

When the RFID label 210 is affixed to an article, the storage memory following the header block stores variable information such as individual management information comprising an item number, manufacturing number, production history information, and so on, for example.

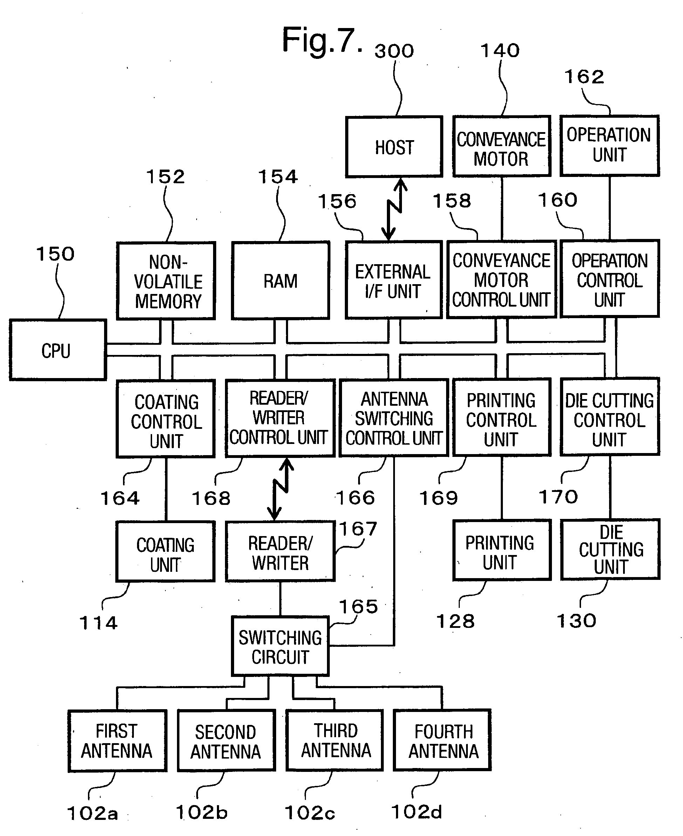

Fig. 7 is a view showing the constitution of a control system of the RFID label manufacturing apparatus 100. In Fig. 7, a CPU 150 controls the entire RFID label manufacturing apparatus 100. Non-volatile memory 152 is constituted by ROM (Read Only Memory) storing various programs executed during control of the RFID label manufacturing apparatus 100, flash memory, and so on. An external interface (I/F) 156 performs communication with a host 300. A conveyance motor control unit 158 controls the driving of a conveyance motor 140 for rotating the supply shafts 112, 116, 120 and the wind-up shafts 124, 134, 136. An operation control unit 160 controls an operation unit 162 comprising various buttons and an operating panel (not shown). A coating control unit 164 controls the coating operation performed by the coating unit 114 on the tacky layer 225.

A switching circuit 165 connects the first antenna 102a through fourth antenna 102d to a reader/writer 167 individually and sequentially. An antenna switching control unit 166 controls the switching operation performed by the switching circuit 165 in relation to the antenna 102. At this time, the antenna switching control unit 166 controls the switching circuit 165 in accordance with the control of the CPU 150 such that the antenna 102 is connected to the reader/writer 167 at least once at a timing at which information can be transmitted and received between the antenna 102 and a single RFID tag 221.

During a predetermined antenna communication cycle, the antenna switching control unit 166 controls the switching circuit 165 by means of so-called time division processing such that the first antenna 102a through fourth antenna 102d are each connected to the reader/writer 167 for a predetermined time period.

Returning to Fig. 7, the reader/writer 167 reads the information stored in the RFID tag 221 and writes information to the RFID tag 221 via the antenna 102 that is connected by the switching circuit 165. A reader/writer control unit 168 performs serial communication or the like with the reader/writer 167 to control the reading and writing operations performed by the reader/writer 167. Note that the circuit of the reader/writer 167 may be incorporated into the reader/writer control unit 168.

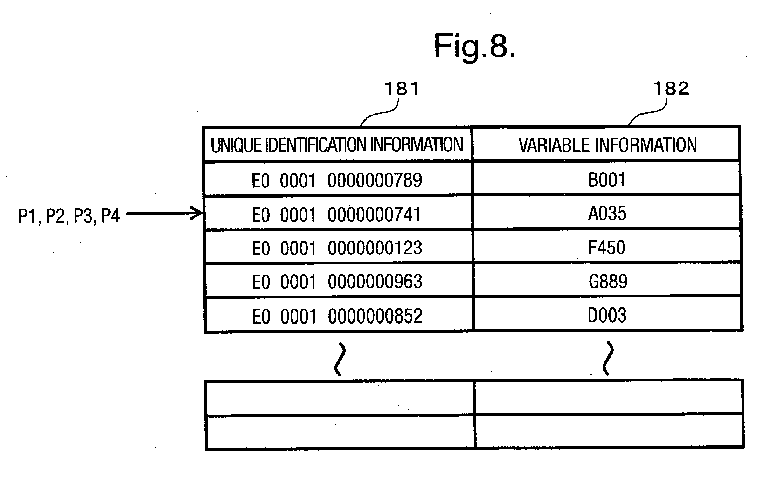

A management table is constructed within RAM (Random Access Memory) 154. Fig. 8 is a schematic diagram of the management table. The management table in the figure comprises a unique identification information storage portion 181 for storing unique identification information received by the antenna 102, and a variable information storage portion 182 for storing variable information which is input by an operator through the operation unit 162, received from the host 300 via the external I/F 156, or to be transmitted through the antenna 102. The RAM 154 is also provided with pointers P1 through P4 corresponding respectively to the first antenna 102a through fourth antenna 102d for specifying storage regions of the unique identification information storage portion 181 and the variable information storage portion 182 in the management table.

A printing control unit 169 controls the identification mark and temporary identification mark printing operations performed by the printing unit 128. A die cutting unit control unit 170 controls the die cutting operation performed by the die cutting unit 130 on the inlet 204 and printing paper 208.

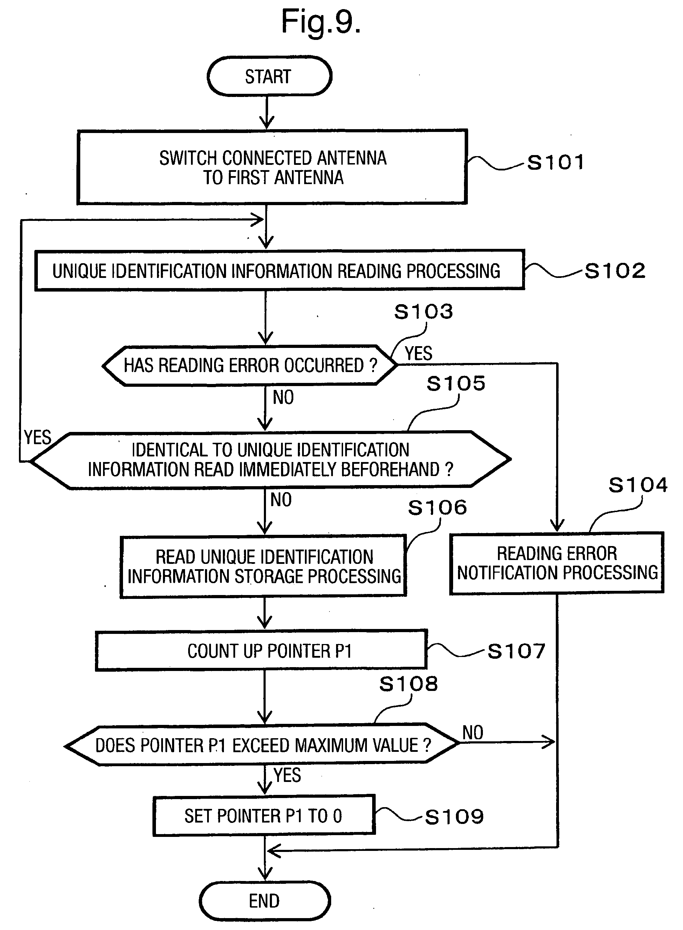

Next, a first operational example of the RFID label manufacturing apparatus 100 will be described in accordance with the flowchart shown in Fig. 9. The flowchart shown in Fig. 9 is an example in which unique identification information is read via the first antenna 102a.

First, during conveyance of the RFID tag 221 in the inlet 204, the CPU 150 instructs the antenna switching control unit 166 to switch the antenna 102 that is connected to the reader/writer 167. The antenna switching control unit 166 controls the switching circuit 165 in response to this instruction such that the antenna connected to the reader/writer 167 is switched to the first antenna 102a (S101).

Next, the CPU 150 instructs the reader/writer control unit 168 to read the unique identification information stored in the RFID tag 221. In response to this instruction, the reader/writer control unit 168 transmits a read signal to the RFID tag 221 via the reader/writer 167 and first antenna 102a. Having received the read signal, the RFID tag 221 attaches reading-related status information to the unique identification information stored in the storage memory of the internal IC chip 223, and then transmits the unique identification information attached with the status information. The reader/writer 167 receives the unique identification information attached with the status information via the first antenna 102a, and outputs the unique identification information attached with the status information to the reader/writer control unit 168. The CPU 150 obtains the unique identification information attached with the status information from the reader/writer control unit 168 (S102).

After obtaining the unique identification information attached with the status information from the reader/writer control unit 168, the CPU 150 analyzes the status information to determine whether or not an error has occurred during reading of the unique identification information (S103).

When it is determined that an error has occurred during reading of the unique identification information, the CPU 150 instructs the operation control unit 160 to provide notification of the reading error. In response to this instruction,' the operation control unit 160 displays notification of the occurrence of the reading error in the first antenna 102a, for example a message such as "RFID read error first antenna", on the operating panel of the operation unit 162, or causes a buzzer (not shown) in the operation unit 162 to ring in such a manner that the operator is able to specify the first antenna 102a as the location of the reading error. Alternatively, the CPU 150 generates error status information indicating the occurrence of the reading error and transmits this error status information to the host 300 via the external I/F 156. The error status information includes information specifying the first antenna 102a as the location of the reading error, and so on. On the basis of the received error status information, the host 300 performs an operation such as screen display or voice output to provide notification of the occurrence of the reading error in the first antenna 102a (S104). The series of operations is then terminated.

By recognizing that a reading error has occurred in the first antenna 102a, the operator may assume that a fault has occurred in the supply shaft 116 immediately prior to the first antenna 102a, and hence that a defect has occurred in the RFID tag 221. Thus the operator is able to take measures such as weakening the tension of the supply shaft 116 or reconsidering its material and shape.

On the other hand, when it is determined in S103 that the unique identification information has been read normally, the CPU 150 reads from the management table the unique identification information stored in the storage region immediately preceding the storage region of the unique identification information storage portion 181 specified by the pointer P1 corresponding to the first antenna 102a. At this time, the pointer P1 specifies the storage region immediately preceding the storage region storing the unique identification information read from the RFID tag 221 immediately before the reading operation performed in S102. Further, the CPU 150 determines by comparison whether or not the unique identification information obtained in S102 is identical to the unique identification information read from the management table (S105). When it is determined that the unique identification information is identical, this indicates that the unique identification information of a single RFID tag 221 has been read at least twice. In this case, the operations from the unique identification information reading processing of S102 onward are repeated in order to read the unique identification information stored in another RFID tag 221.

On the other hand, when it is determined that the unique identification information obtained in S102 is different to the unique identification information read from the management table, the CPU 150 stores the unique identification information obtained in S102 in the storage region of the unique identification information storage portion 181 specified by the pointer P1 (S106). As a result, the unique identification information stored in each RFID tag 221 is stored in the unique identification information storage portion 181, enabling management of the RFID tags 221 based on their unique identification information even when the unique identification information is numbered irregularly.

The CPU 150 then counts up the pointer P1 to specify the storage region of the unique identification information storage portion 181 into which unique identification information read from the next RFID tag 221 is to be written (S107). Next, the CPU 150 determines whether or not the value of the counted-up pointer P1 exceeds a maximum value, or in other words whether or not a storage region beyond the rearmost storage region of the management table is specified (S108). When the maximum value has not been exceeded, the series of operations is terminated. When the maximum value has been exceeded, the CPU 150 initializes the value of the pointer P1 (S109) and then terminates the series of operations. Thus the management table is used in circulatory fashion, enabling a reduction in the amount of memory used by the management table in the RAM 154.

According to the RFID label manufacturing apparatus 100 corresponding to the operations illustrated in Fig. 9, upon detection of a unique identification information reading error caused by a defect in the RFID tag 221 or the like, notification is in such a manner that the first antenna 102a is specified as the location of the error. Thus the operator is able to specify the location of the defect on the conveyance path of the RFID label manufacturing apparatus 100 and take appropriate measures. Note that detection and notification of a reading error may be performed by means of similar operations to those shown in Fig. 9 when unique identification information is read via another antenna 102. In such a case, the shield member 104 is disposed in the vicinity of the other antenna 102 similarly to the first antenna 102a, thereby blocking external electromagnetic waves and restricting the communication region of the antenna 102 such that communication is possible only with a single RFID tag 221.

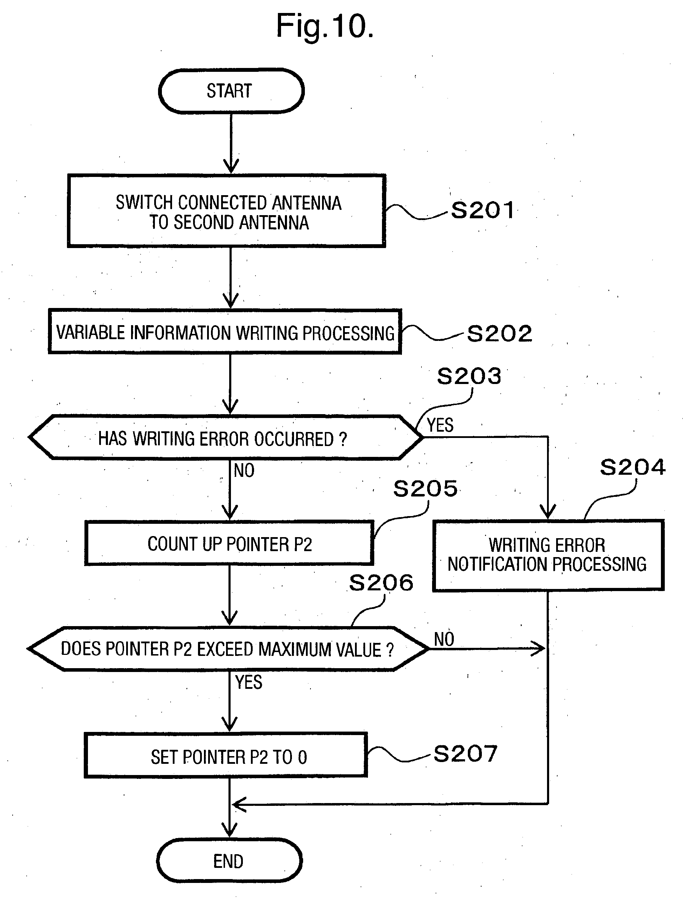

Next, a second operational example of the RFID label manufacturing apparatus 100 will be described in accordance with the flowchart shown in Fig. 10. The flowchart shown in Fig. 10 shows an example of a case in which variable information is written via the second antenna 102b.

First, during conveyance of the RFID tag 221 in the inlet 204, the CPU 150 instructs the antenna switching control unit 166 to switch the antenna 102 that is connected to the reader/writer 167. The antenna switching control unit 166 controls the switching circuit 165 in response to this instruction such that the antenna connected to the reader/writer 167 is switched to the second antenna 102b (S201) .

Next, the CPU 150 instructs the reader/writer control unit 168 to write the variable information that is stored in the variable information storage portion 182 specified by the pointer P2 corresponding to the second antenna 102b from the management table to the RFID tag 221. In response to this instruction, the reader/writer control unit 168 specifies the RFID tag 221 by the unique identification information stored in the unique identification information storage portion 181 specified by the pointer P2, and transmits a write signal including the variable information to the specified RFID tag 221 via the reader/writer 167 and second antenna 102b. The RFID tag 221, having received the write signal, stores the variable information included in the write signal in the storage memory of the internal IC chip 223, and transmits writing-related status information. The reader/writer 167 receives this status information via the second antenna 102b and outputs the status information to the reader/writer control unit 168. The CPU 150 obtains the status information from the reader/writer control unit 168 (S202).

The CPU 150 analyzes the status information received from the reader/writer control unit 168 to determine whether or not an error has occurred during writing of the variable information (S203).

When it is determined that an error has occurred during writing of the variable information, the CPU 150 instructs the operation control unit 160 to provide notification of the writing error. In response to this instruction, the operation control unit 160 displays notification of the occurrence of the writing error in the second antenna 102b, for example a message such as "RFID write error second antenna", on the operating panel of the operation unit 162, or causes the buzzer in the operation unit 162 to ring in such a manner that the operator is able to specify the second antenna 102b as the location of the writing error. Alternatively, the CPU 150 generates error status information indicating the occurrence of the writing error and transmits this error status information to the host 300 via the external I/F 156. The error status information includes information specifying the second antenna 102b as the location of the writing error, and so on. On the basis of the received error status information, the host 300 performs an operation such as screen display or voice output to provide notification of the occurrence of the writing error in the second antenna 102b (S204). The series of operations is then terminated.

By recognizing that a writing error has occurred in the second antenna 102b, the operator may assume that a fault has occurred in the rollers 117a, 117b immediately prior to the second antenna 102b, and hence that a defect has occurred in the RFID tag 221. Thus the operator is able to take measures such as weakening the tension of the rollers 117a, 117b or reconsidering their material and shape.

On the other hand, when it is determined in S203 that the variable information has been written normally, the CPU 150 counts up the pointer P2 to specify the storage region of the variable information storage portion 182 storing the variable information to be written into the RFID tag 221 next (S205). The CPU 150 then determines whether or not the value of the counted-up pointer P2 exceeds the maximum value (S206). When the maximum value has not been exceeded, the series of operations is terminated. When the maximum value has been exceeded, the CPU 150 initializes the value of the pointer P2 (S207) and then terminates the series of operations.

According to the RFID label manufacturing apparatus 100 corresponding to the operations illustrated in Fig. 10, upon detection of a variable information writing error caused by a defect in the RFID tag 221 or the like, notification is provided in such a manner that the second antenna 102b can be specified as the location of the error. Thus the operator is able to specify the location of the defect on the conveyance path of the RFID label manufacturing apparatus 100 and take appropriate measures.

Note that detection and notification of a writing error may be performed by means of similar operations to those shown in Fig. 10 when variable information is written via another antenna 102. Furthermore, the variable information written into the RFID tag 221 may be deleted before the RFID tag 221 is wound around the wind-up shaft 134.

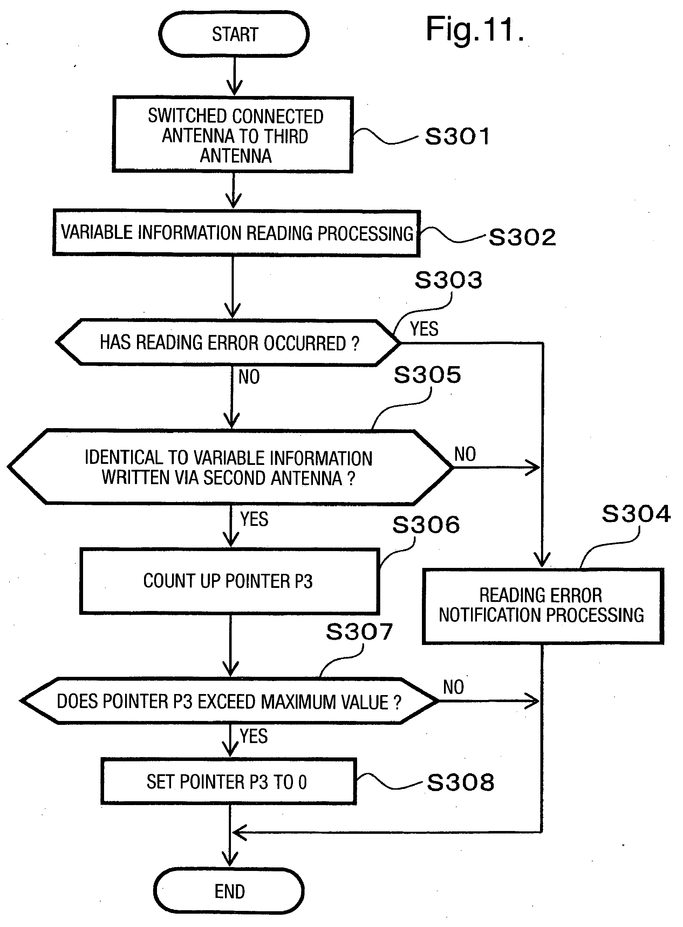

Next, a third operational example of the RFID label manufacturing apparatus 100 will be described in accordance with the flowchart shown in Fig. 11. The flowchart in Fig. 11 shows an example of a case in which variable information written via the second antenna 102b is read via the third antenna 102c.

First, during conveyance of the RFID tag 221 in the inlet 204, the CPU 150 instructs the antenna switching control unit 166 to switch the antenna 102 that is connected to the reader/writer 167. The antenna switching control unit 166 controls the switching circuit 165 in response to this instruction such that the antenna connected to the reader/writer 167 is switched to the third antenna 102c (S301) .

Next, the CPU 150 instructs the reader/writer control unit 168 to read the variable information stored in the RFID tag 221. In response to this instruction, the reader/writer control unit 168 specifies the RFID tag 221 by the unique identification information stored in the unique identification information storage portion 181 specified by the pointer P3, and transmits a read signal to the specified RFID tag 221 via the reader/writer 167 and third antenna 102c. The RFID tag 221, having received the read signal, attaches reading-related status information to the variable information stored in the storage memory of the internal IC chip 223, and then transmits the variable information attached with the status information. The reader/writer 167 receives the variable information attached with the status information via the third antenna 102c and outputs the variable information attached with the status information to the reader/writer control unit 168. The CPU 150 obtains the variable information attached with the status information from the reader/writer control unit 168 (S302).

Having obtained the variable information attached with the status information from the reader/writer control unit 168, the CPU 150 analyzes the status information to determine whether or not an error has occurred during reading of the variable information (S303).

When it is determined that an error has occurred during reading of the variable information, the CPU 150 instructs the operation control unit 160 to provide notification of the reading error. In response to this instruction, the operation control unit 160 displays notification of the occurrence of the reading error in the third antenna 102c, for example a message such as "RFID read error third antenna", on the operating panel of the operation unit 162, or causes the buzzer in the operation unit 162 to ring in such a manner that the operator is able to specify the third antenna 102c as the location of the reading error. Alternatively, the CPU 150 generates error status information indicating the occurrence of the reading error and transmits this error status information to the host 300 via the external I/F 156. The error status information includes information specifying the third antenna 102c as the location of the reading error, and so on. On the basis of the received error status information, the host 300 performs an operation such as screen display or voice output to provide notification of the occurrence of the reading error in the third antenna 102c (S304). The series of operations is then terminated.

By recognizing that a reading error has occurred in the third antenna 102c, the operator may assume that a fault has occurred in the rollers 126a, 126b located immediately prior to the third antenna 102c, and hence that a defect has occurred in the RFID tag 221. Thus the operator is able to take measures such as weakening the pressure of the rollers 126a, 126b or reconsidering their material and shape.

On the other hand, when it is determined in S303 that the variable information has been read normally, the CPU 150 reads from the management table the variable information that is stored in the storage region of the variable information storage portion 182 specified by the pointer P3 corresponding to the third antenna 102c. At this time, the pointer P3 specifies the storage region of the variable information storage portion 182 storing the variable information written into the RFID tag 122 via the second antenna 102b during the processing of S202 in Fig. 10. Further, the CPU 150 determines by comparison whether or not the variable information obtained in S302 is identical to the variable information read from the management table (S305).
When it is determined that the unique identification information is not identical, this indicates that a reading error has occurred in that the variable information written into the RFID tag 221 via the second antenna 102b has not been read via the third antenna 102c, and therefore reading error notification processing (S304) is performed. This processing is identical in detail to that described above, and hence description thereof has been omitted.

On the other hand, when it is determined that the unique identification is identical, the CPU 150 counts up the pointer P3 to specify the storage region of the variable information storage portion 182 from which variable information is to be read next (S306). The CPU 150 then determines whether or not the value of the counted-up pointer P3 exceeds the maximum value (S307). When the maximum value has not been exceeded, the series of operations is terminated. When the maximum value has been exceeded, the CPU 150 initializes the value of the pointer P3 (S308) and then terminates the series of operations.

According to the RFID label manufacturing apparatus 100 corresponding to the operations illustrated in Fig. 11, upon detection of a variable information writing error caused by a defect in the RFID tag 221 or the like, notification is provided in such a manner that the third antenna 102c can be specified as the location of the error. Thus the operator is able to specify the location of the defect on the conveyance path of the RFID label manufacturing apparatus 100 and take appropriate measures.

Note that detection and notification of a reading error may be performed by means of similar operations to those shown in Fig. 11 when other antennas 102 are combined such that variable information written via one antenna 102 is read by the other antenna 102.

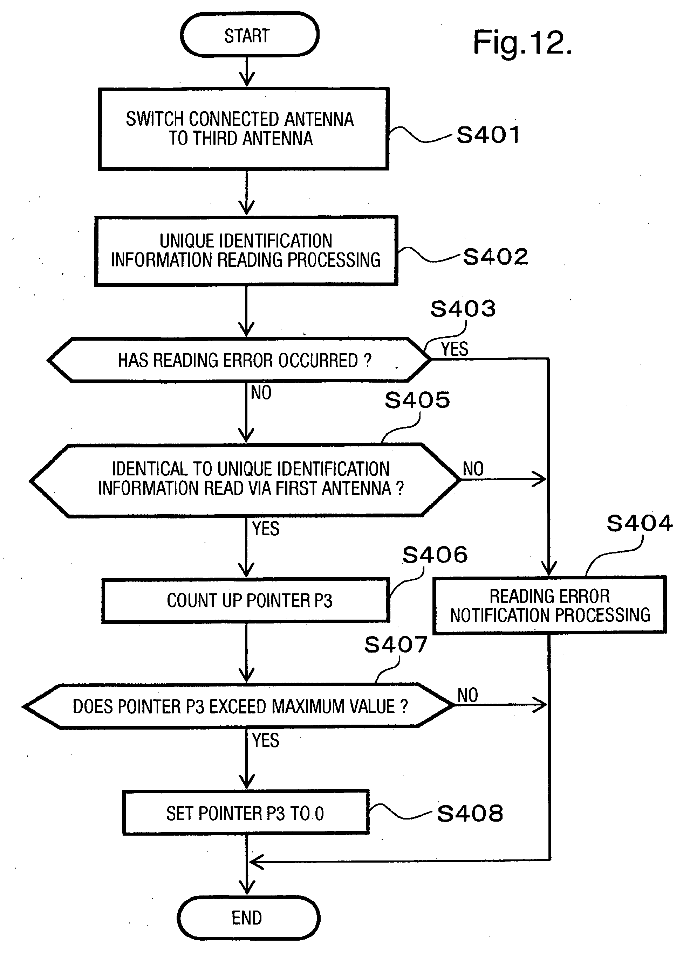

Next, a fourth operational example of the RFID label manufacturing apparatus 100 will be described in accordance with the flowchart shown in Fig. 12. The flowchart shown in Fig. 12 shows an example of a case in which unique identification information is read via the first antenna 102a and also read via the third antenna 102c.

First, during conveyance of the RFID tag 221 in the inlet 204, the CPU 150 instructs the antenna switching control unit 166 to switch the antenna 102 that is connected to the reader/writer 167. The antenna switching control unit 166 controls the switching circuit 165 in response to this instruction such that the antenna connected to the reader/writer 167 is switched to the third antenna 102c (S401).

Next, the CPU 150 instructs the reader/writer control unit 168 to read the unique identification information stored in the RFID tag 221. The reader/writer control unit 168 specifies the RFID tag 221 by the unique identification information stored in the storage region of the unique identification information storage portion 181 specified by the pointer P3, and transmits a read signal to the specified RFID tag 221 via the reader/writer 167 and third antenna 102c. The RFID tag 221, having received the read signal, attaches reading-related status information to the unique identification information stored in the storage memory of the internal IC chip 223, and transmits the unique identification information attached with the status information. The reader/writer 167 receives the unique identification information attached with the status information via the third antenna 102c and outputs the unique identification information attached with the status information to the reader/writer control unit 168. The CPU 150 obtains the unique identification information attached with the status information from the reader/writer control unit 168 (S402).

Having obtained the unique identification information attached with the status information from the reader/writer control unit 168, the CPU 150 analyzes the status information to determine whether or not an error has occurred during reading of the unique identification information (S403).

When it is determined that an error has occurred during reading of the unique identification information, the CPU 150 instructs the operation control unit 160 to provide notification of the reading error. In response to this instruction, the operation control unit 160 displays notification of the occurrence of the reading error in the third antenna 102c, for example a message such as "RFID read error third antenna", on the operating panel of the operation unit 162, or causes the buzzer in the operation unit 162 to ring in such a manner that the operator is able to specify the third antenna 102c as the location of the reading error. Alternatively, the CPU 150 generates error status information indicating the occurrence of the reading error and transmits this error status information to the host 300 via the external I/F 156. The error status information includes information specifying the third antenna 102c as the location of the reading error, and so on. On the basis of the received error status information, the host 300 performs an operation such as screen display or voice output to provide notification of the occurrence of the reading error in the third antenna 102c (S404). The series of operations is then terminated.

By recognizing that a reading error has occurred in the third antenna 102c, the operator may assume that a fault has occurred in the rollers 126a, 126b located immediately prior to the third antenna 102c, and hence that a defect has occurred in the RFID tag 221. Thus the operator is able to take measures such as weakening the pressure of the rollers 126a, 126b or reconsidering their material and shape.

On the other hand, when it is determined in S403 that the unique identification information has been read normally, the CPU 150 reads from the management table the unique identification information that is stored in the storage region of the unique identification information storage portion 181 specified by the pointer P3 corresponding to the third antenna 102c. At this time, the pointer P3 specifies the storage region of the unique identification information storage portion 181 storing the unique identification information read from the RFID tag 221 via the first antenna 102a during the processing of S102 in Fig. 9. Further, the CPU 150 determines by comparison whether or not the unique identification information obtained in S402 is identical to the unique identification information read from the management table (S405).
When it is determined that the unique identification information is not identical, this indicates that a reading error has occurred in that the unique identification information read from the RFID tag 221 via the first antenna 102a has not been read via the third antenna 102c, and therefore reading error notification processing (S404) is performed. This processing is identical in detail to that described above, and hence description thereof has been omitted.

On the other hand, when it is determined that the unique identification is identical, the CPU 150 counts up the pointer P3 to specify the storage region of the unique identification information storage portion 181 from which unique identification information is to be read next (S406). The CPU 150 then determines whether or not the value of the counted-up pointer P3 exceeds the maximum value (S407). When the maximum value has not been exceeded, the series of operations is terminated. When the maximum value has been exceeded, the CPU 150 initializes the value of the pointer P3 (S408) and then terminates the series of operations.
According to the RFID label manufacturing apparatus 100 corresponding to the operations illustrated in Fig. 12, upon detection of a unique identification information reading error caused by a defect in the RFID tag 221 or the like, notification is provided in such a manner that the third antenna 102c can be specified as the location of the error. Thus the operator is able to specify the location of the defect on the conveyance path of the RFID label manufacturing apparatus 100 and take appropriate measures.

Note that detection and notification of a reading error may be performed by means of similar operations to those shown in Fig. 12 when other antennas 102 are combined such that unique identification information read via one antenna 102 is also read by the other antenna 102.

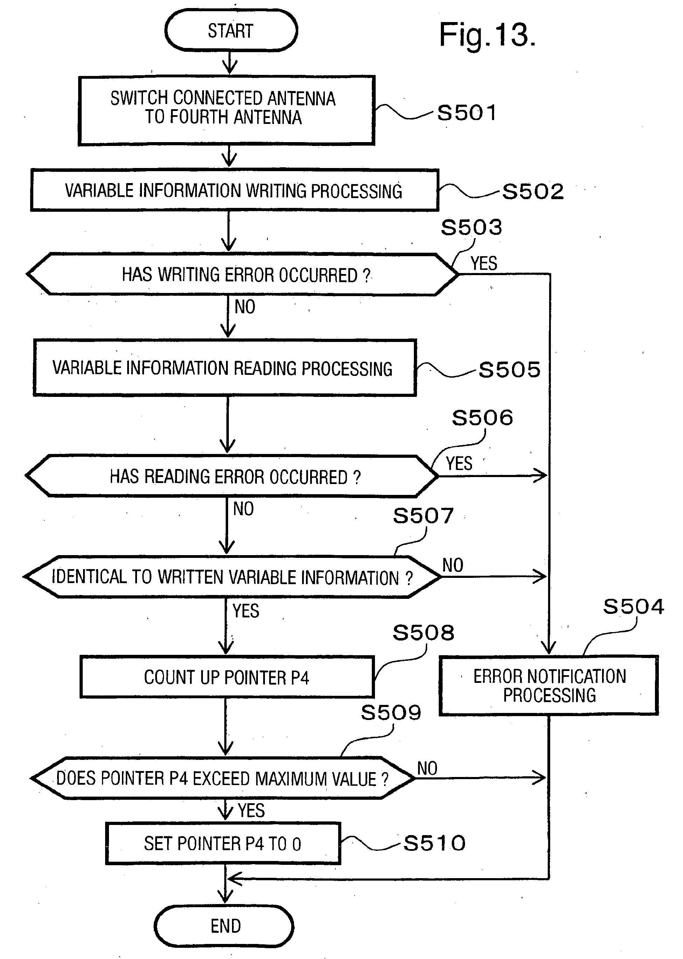

Next, a fifth operational example of the RFID label manufacturing apparatus 100 will be described in accordance with the flowchart shown in Fig. 13. The flowchart in Fig. 13 shows an example of a case in which variable information is written and read via the fourth antenna 102d.

First, during conveyance of the RFID tag 221 in the inlet 204, the CPU 150 instructs the antenna switching control unit 166 to switch the antenna 102 that is connected to the reader/writer 167. The antenna switching control unit 166 controls the switching circuit 165 in response to this instruction such that the antenna connected to the reader/writer 167 is switched to the fourth antenna 102d (S501) .

Next, the CPU 150 instructs the reader/writer control unit 168 to write the variable information that is stored in the variable information storage portion 182 specified by the pointer P4 corresponding to the fourth antenna 102d from the management table into the RFID tag 221. In response to this instruction, the reader/writer control unit 168 specifies the RFID tag 221 by the unique identification information stored in the unique identification information storage portion 181 specified by the pointer P4, and transmits a write signal including the variable information to the specified RFID tag 221 via the reader/writer 167 and fourth antenna 102d. The RFID tag 221, having received the write signal, stores the variable information included in the write signal in the storage memory of the internal IC chip 223, and transmits writing-related status information. The reader/writer 167 receives the status information via the fourth antenna 102d and outputs the status information to the reader/writer control unit 168. The CPU 150 obtains the status information from the reader/writer control unit 168 (S502).

The CPU 150 analyzes the status information received from the reader/writer control unit 168 to determine whether or not an error has occurred during writing of the variable information (S503).

When it is determined that an error has occurred during writing of the variable information, the CPU 150 instructs the operation control unit 160 to provide notification of the writing error. In response to this instruction, the operation control unit 160 displays notification of the occurrence of the writing error in the fourth antenna 102d, for example a message such as "RFID write error fourth antenna", on the operating panel of the operation unit 162, or causes the buzzer in the operation unit 162 to ring in such a manner that the operator is able to specify the fourth antenna 102d as the location of the writing error. Alternatively, the CPU 150 generates error status information indicating the occurrence of the writing error and transmits this error status information to the host 300 via the external I/F 156. The error status information includes information specifying the fourth antenna 102d as the location of the writing error, and so on. On the basis of the received error status information, the host 300 performs an operation such as screen display or voice output to provide notification of the occurrence of the writing error in the fourth antenna 102d (S504). The series of operations is then terminated.

By recognizing that a writing error has occurred in the fourth antenna 102d, the operator may assume that a fault has occurred in any of the die cutting unit 130, the rollers 132a, 132b, and the wind-up shaft 134, which are located immediately prior to the fourth antenna 102d, and hence that a defect has occurred in the RFID tag 221. Thus the operator is able to take measures such as weakening the pressure of the die cutting unit 130, the pressure of the rollers 132a, 132b, and the tension of the wind-up shaft 134, or reconsidering their materials and shapes.

On the other hand, when it is determined in S503 that the variable information has been written normally, the CPU 150 instructs the reader/writer control unit 168 to read the variable information stored in the RFID tag 221. In response to this instruction, the reader/writer control unit 168 specifies the RFID tag 221 by the unique identification information stored in the unique identification information storage portion 181 specified by the pointer P4, and transmits a read signal to the specified RFID tag 221 via the reader/writer 167 and fourth antenna 102d. The RFID tag 221, having received the read signal, attaches reading-related status information to the variable information stored in the storage memory of the internal IC chip 223, and transmits the variable information attached with the status information. The reader/writer 167 receives the variable information attached with the status information via the fourth antenna 102d and outputs the variable information attached with the status information to the reader/writer control unit 168. The CPU 150 obtains the variable information attached with the status information from the reader/writer control unit 168 (S505).

Having obtained the variable information attached with the status information from the reader/writer control unit 168, the CPU 150 analyzes the status information to determine whether or not an error has occurred during reading of the variable information (S506).

When it is determined that an error has occurred during reading of the variable information, the CPU 150 instructs the operation control unit 160 to provide notification of the reading error. In response to this instruction, the operation control unit 160 displays notification of the occurrence of the reading error in the fourth antenna 102d, for example a message such as "RFID read error fourth antenna", on the operating panel of the operation unit 162, or causes the buzzer in the operation unit 162 to ring in such a manner that the operator is able to specify the fourth antenna 102d as the location of the reading error. Alternatively, the CPU 150 generates error status information indicating the occurrence of the reading error and transmits this error status information to the host 300 via the external I/F 156. The error status information includes information specifying the fourth antenna 102d as the location of the reading error, and so on. On the basis of the received error status information, the host 300 performs an operation such as screen display or voice output to provide notification of the occurrence of the reading error in the fourth antenna 102d (S504). The series of operations is then terminated.

As described above, by recognizing that a reading error has occurred in the fourth antenna 102d, the operator may assume that a fault has occurred in any of the die cutting unit 130, the rollers 132a, 132b, and the wind-up shaft 134, which are located immediately prior to the fourth antenna 102d, and hence that a defect has occurred in the RFID tag 221. Thus the operator is able to take measures such as weakening the pressure of the die cutting unit 130, the pressure of the rollers 132a, 132bⁱⁱ, and the tension of the wind-up shaft 134, or reconsidering their materials and shapes.
On the other hand, when it is determined in S506 that the variable information has been read normally, the CPU 150 reads from the management table the variable information that is stored in the storage region of the variable information storage portion 182 specified by the pointer P4 corresponding to the fourth antenna 102d. At this time, the pointer P4 specifies the storage region of the variable information storage portion 182 storing the variable information written into the RFID tag 221 in S502. Further, the CPU 150 determines by comparison whether or not the variable information obtained in S505 is identical to the variable information read from the management table (S507). When it is determined that the variable information is not identical, this indicates that a reading error has occurred in that the variable information written into the RFID tag 221 via the fourth antenna 102d has not been read, and therefore reading error notification processing (S504) is performed. This processing is identical in detail to that described above, and hence description thereof has been omitted.

On the other hand, when it is determined that the variable information is identical, the CPU 150 counts up the pointer P4 to specify the storage region of the variable information storage portion 182 from which the variable information written in the RFID tag 221 is to be read next (S508). The CPU 150 then determines whether or not the value of the counted-up pointer P4 exceeds the maximum value (S509). When the maximum value has not been exceeded, the series of operations is terminated. When the maximum value has been exceeded, the CPU 150 initializes the value of the pointer P4 (S510) and then terminates the series of operations.
According to the RFID label manufacturing apparatus 100 corresponding to the operations illustrated in Fig. 13, upon detection of a variable information writing error or reading error caused by a defect in the RFID tag 221 or the like, notification is provided in such a manner that the fourth antenna 102d can be specified as the location of the error. Thus the operator is able to specify the location of the defect on the conveyance path of the RFID label manufacturing apparatus 100 and take appropriate measures.

Note that detection and notification of writing and reading errors may be performed by means of similar operations to those shown in Fig. 13 when variable information writing and reading are performed via another antenna 102.

In the embodiment described above, the RFID label manufacturing apparatus 100, which manufactures the RFID label 210 by temporarily adhering the RFID label 210 to the backing sheet 202, was used as an example, but the present invention is not limited to this example, and may also be applied to an RFID tag manufacturing apparatus for manufacturing tag paper which encases the RFID tag 221 and'is used for price tags affixed to clothing and the like, inventory tags, and so on.

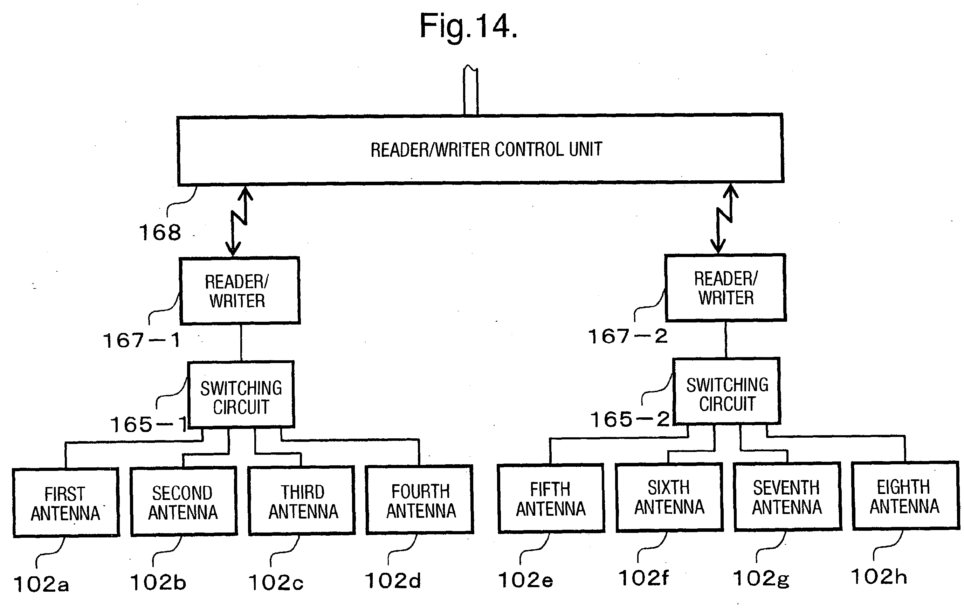

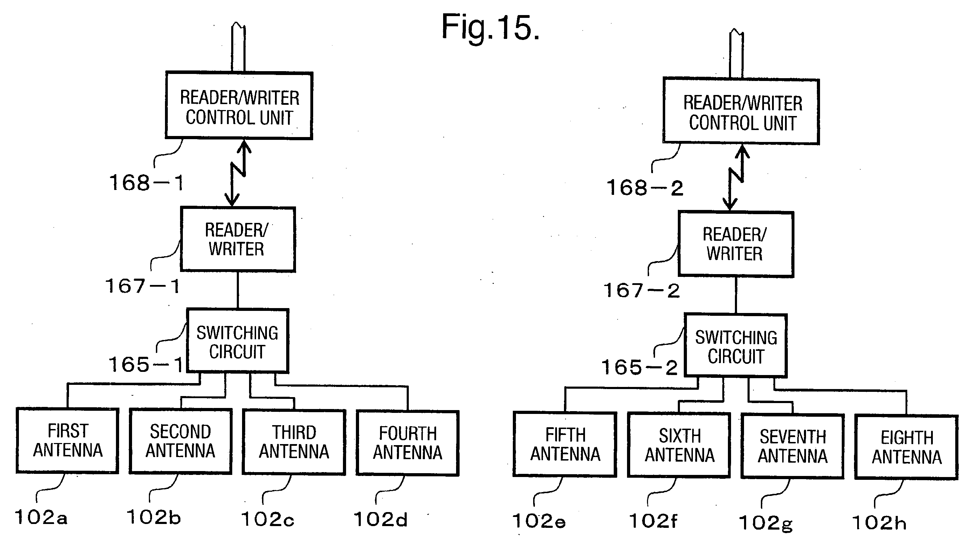

Further, in the embodiment described above, the RFID label manufacturing apparatus 100 comprises a single reader/writer 167 which is shared among the first antenna 102a through fourth antenna 102d, but when a larger number of antennas is provided, it is preferable to ensure that the time each antenna 102 is connected to the reader/writer 167 during time division processing can be lengthened to a certain extent. Accordingly, the RFID label manufacturing apparatus 100 may be provided with a plurality of reader/writers 167 which are each shared by a plurality of antennas 102. In Fig. 14, for example, two reader/writers 167-1 and 167-2 are provided together with a switching circuit 165-1 for performing connection switching in relation to the reader/writer 167-1 and a switching circuit 165-2 for performing connection switching in relation to the reader/writer 167-2. The reader/writer 167-1 is shared by the first antenna 102a through fourth antenna 102d, while the reader/writer 167-2 is shared by a fifth antenna 102e through an eighth antenna 102h. The reader/writer control unit 168 controls both the reader/writer 167-1 and the reader/writer 167-2. Alternatively, as shown in Fig. 15, two reader/writer control units 168-1 and 168-2 may be provided such that the reader/writer control unit 168-1 controls the reader/writer 167-1 shared by the first antenna 102a through fourth antenna 102d, and the reader/writer control unit 168-2 controls the reader/writer 167-2 shared by the fifth antenna 102e through eighth antenna 102h. By means of the constitutions shown in Figs. 14 and 15, the time an individual antenna 102 is connected to the reader/writer 167 can be lengthened to a certain extent even when the number of antennas 102 increases, and hence an increase in the processing speed can be achieved. A further increase in the processing speed can be achieved by providing the antenna switching control unit 166 for each switching circuit 165 or providing individual CPUs 150 corresponding respectively to the plurality of reader/writers 167.

As described above, according to the RFID paper manufacturing apparatus and the inspection method of an RFID paper manufacturing apparatus of the present invention, the location of a fault on the conveyance path of the apparatus which causes an information reading or writing error can be specified easily, and hence the present invention is useful as an RFID paper manufacturing apparatus and an inspection method of an RFID paper manufacturing apparatus.

## Claims

1. An RFID paper manufacturing apparatus for manufacturing paper encasing an RFID tag on which information is stored, comprising:
information reading/writing means for performing at least one of reading said information stored in said RFID tag and writing information to said RFID tag;
a plurality of antennas disposed in a plurality of predetermined positions on a path along which said RFID tag is conveyed, for transmitting and receiving information to/from said RFID tag;
antenna switching means for switching an antenna that is connected to said information reading/writing means; and
error detecting means for detecting an error in at least one of said information writing and said information reading provided by said information reading/writing means via an antenna that is connected to said information reading/writing means by a switching operation of said antenna switching means.

2. The RFID paper manufacturing apparatus according to claim 1, further comprising error notification control means for controlling the notification of said error detected by said error detecting means in such a manner that an antenna relating to said error can be specified.

3. The RFID paper manufacturing apparatus according to claim 1 or claim 2, wherein said antenna switching means connects an antenna to said information reading/writing means at a timing at which transmission and reception between said antenna and a single RFID tag are possible.

4. The RFID paper manufacturing apparatus according to any of claims 1 through 3, wherein said plurality of antennas comprise:
a first antenna for receiving unique identification information stored in said RFID tag; and
a second antenna disposed further downstream than said first antenna on said path along which said RFID tag is conveyed, for transmitting variable information to said RFID tag specified by said unique identification information received by said first antenna.

5. The RFID paper manufacturing apparatus according to claim 4, wherein said plurality of antennas further comprise a third antenna for receiving at least one of said unique identification information and said variable information stored in said RFID tag specified by said unique identification information received by said first antenna.

6. The RFID paper manufacturing apparatus according to claim 4 or claim 5, further comprising a shield member which is disposed in the vicinity of said first antenna, for blocking electromagnetic waves.

7. An RFID paper manufacturing apparatus for manufacturing paper encasing an RFID tag on which information is stored, comprising:
a plurality of information reading/writing means for performing at least one of reading said information stored in said RFID tag and writing information to said RFID tag;
a plurality of antennas corresponding respectively to said plurality of information reading/writing means and disposed in a plurality of predetermined positions on a path along which said RFID tag is conveyed, for transmitting and receiving information to/from said RFID tag;
antenna switching means provided so as to correspond respectively to said plurality of information reading/writing means, for switching antennas that are connected to said information reading/writing means; and
error detecting means for detecting an error in at least one of said information writing and said information reading provided by corresponding information reading/writing means via an antenna that is connected to said information reading/writing means by'a switching operation of said antenna switching means.

8. An inspection method of an RFID paper manufacturing apparatus for manufacturing paper encasing an RFID tag on which information is stored, said method comprising the steps of:
switching a connection between a plurality of antennas, which are disposed in a plurality of predetermined positions on a path along which said RFID tag is conveyed for transmitting and receiving information to/from said RFID tag, and information reading/writing means;
having said information reading/writing means, to which an antenna is connected in said antenna switching step, perform at least one of reading said information stored in said RFID tag and writing information to said RFID tag via said connected antenna; and
detecting an error in at least one of said information writing and said information reading performed in said information reading/writing step.

9. The inspection method of an RFID paper manufacturing apparatus according to claim 8, further comprising the step of controlling the notification of said error detected in said error detecting step in such a manner that an antenna relating to said error can be specified.

10. The inspection method of an RFID paper manufacturing apparatus according to claim 8 or claim 9, wherein, in said antenna switching step, an antenna is connected to said information reading/writing means at a timing at which transmission and reception between said antenna and a single RFID tag are possible.
